(19) **Europäisches Patentamt / European Patent Office / Office européen des brevets**

(11) **EP 2 096 442 B1**

(12) **EUROPEAN PATENT SPECIFICATION**

(45) Date of publication and mention of the grant of the patent:
**25.07.2018 Bulletin 2018/30**

(51) Int Cl.:
***G01N 35/00*** *(2006.01)*

(21) Application number: **09002142.9**

(22) Date of filing: **16.02.2009**

(54) **Automatic analyzer**

Automatisches Analysegerät

Analyseur automatique

(84) Designated Contracting States:
**DE FR**

(30) Priority: **28.02.2008 JP 2008047033**

(43) Date of publication of application:
**02.09.2009 Bulletin 2009/36**

(73) Proprietor: **Hitachi High-Technologies Corporation**
**Tokyo 105-8717 (JP)**

(72) Inventors:
• **Hamazumi, Yuko**
**Tokyo 105-8717 (JP)**
• **Mimura, Tomonori**
**Hitachinaka-shi**
**Ibaraki 312-8504 (JP)**

• **Fukuyama, Yuki**
**Tokyo 100-8220 (JP)**

(74) Representative: **Strehl Schübel-Hopf & Partner**
**Maximilianstrasse 54**
**80538 München (DE)**

(56) References cited:
JP-A- S6 312 964    JP-A- H09 325 150
JP-A- S61 218 949    JP-A- 2004 347 385
JP-A- 2006 337 125

• **HIROSHI MITSUMAKI ET AL: "SMALL SIZED AUTOMATED BLOOD ANALYZER CAPABLE OF QUICK RESPONSE TO MULTIPLE APPLICATIONS", HITACHI REVIEW, HITACHI LTD. TOKYO, JP, vol. 41, no. 4, 2 September 1992 (1992-09-02), pages 161-166, XP000334655, ISSN: 0018-277X**

EP 2 096 442 B1

# Description

Field of the Invention

The present invention relates to an automatic analyzer that performs a qualitative/quantitative analysis of a biological sample such as blood and urine, and more particularly to an automatic analyzer that is capable of monitoring the reactions of an analyzer for clinical examination.

2. Description of the Related Art

An automatic analyzer for clinical examination operates so that specific amounts of reagent and sample are dispensed to causing mixing and reaction. After the absorbance of the resulting reaction solution is measured for a predetermined period of time, the concentration of an analysis target component is determined in accordance with the results of measurements.

Disclosed in JP-A-2005-201843 is a method of approximating the relationship between reaction time and reaction product to determine the degree of reaction progress and whether a reaction rate is high or low. An expression called a logistic curve is generally used as an approximate expression for the reaction rate. The logistic curve is such that a reaction itself approaches a certain limit when the reaction time elapses to some extent, and converges to a certain measured value in infinite time. General chemical reaction is basically the same as described above.

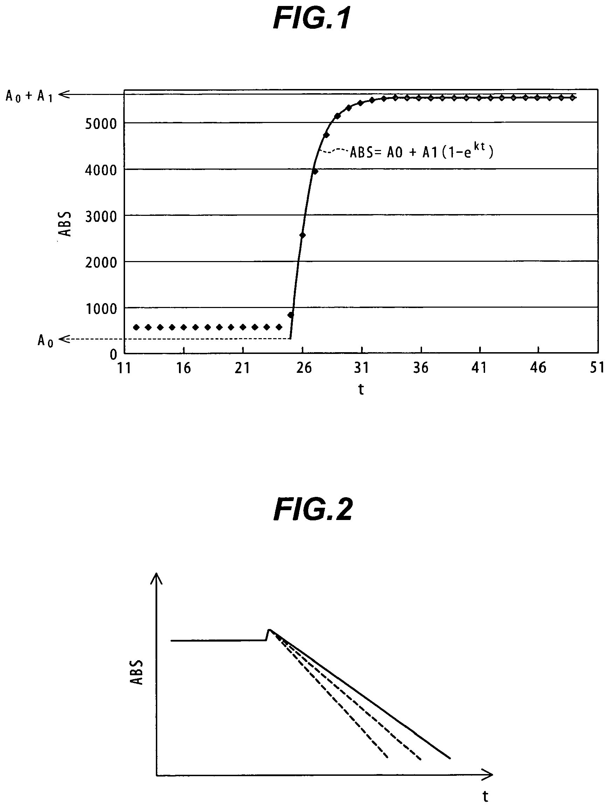

Fig. 1 is a schematic diagram illustrating the logistic curve.

The expression represented by the logistic curve is as follows:

$$ABS = A_0 + A_1 (1 - e^{-kt})$$

For the calculation of the approximate expression, a solution formula based on the least-squares method is used.

The measurement methods for clinical examination can be classified into two types (rate analysis and endpoint analysis) depending on reaction. Rate analysis and endpoint analysis will now be described.

(1) Rate analysis

A rate analysis is performed to measure the activity of an enzyme component contained in a sample. As measuring the concentration of an enzyme is meaningless, measurements are made to determine its activity value. The employed measurement method is such that a certain amount of substrate is added as a reagent to measure an element that changes when the enzyme consumes the substrate. Therefore, the resulting reaction is such that the measured value varies with temporal changes in increments of a fixed amount as shown in Fig. 2. This type of analysis is referred to as a rate analysis.

(2) Endpoint analysis

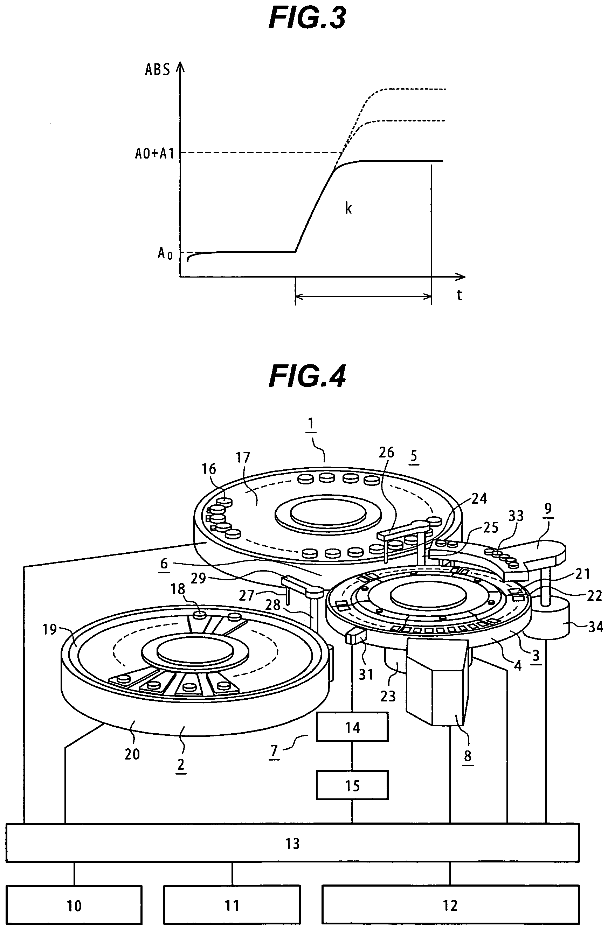

When protein, lipid, or other component of a sample is measured, the component of the sample reacts with a reagent. When a binding reaction is quick, the reaction terminates within a short period of time so that the concentration of a reaction product becomes fixed. If the reaction time is long, it takes a certain amount of time for the reaction product to reach a fixed concentration. Fig. 3 shows the relationship between time and reaction product.

Described in JP-A-6-194313 is a method of accurately determining the concentration of a measurement target for biochemical analysis purposes. This method determines the concentration of a measurement target substance by performing approximation with the equation $y = A + (B - A)/e^{Kt}$ through the use of the least-squares method while using time and absorbance data, which is obtained when the relationship between chromogenic reaction absorbance and time is measured by the rate method and endpoint method. JP 2004 347385 A discloses an automatic analyzer with the features in the preamble of present claim 1. Another example of a conventional analyzer is described in JP H09 325150 A.

SUMMARY OF THE INVENTION

The scope of the present invention is defined in the appended independent claims.

Analyses for clinical examination require not only an apparatus such as an automatic analyzer, but also various other items such as a reagent for each analysis, a standard solution for reagent calibration, a currently analyzed apparatus, and an accuracy control sample to be measured for reagent status checkout. When these items are combined, the final performance is obtained.

Existing factors to be combined are a plurality of performance determining factors such as the dispensing amount accuracy of apparatus, uniformity in reagent bottle, storage stability, the degree of chemical reaction, and more particularly, reagent-sample mixing efficiency, reaction vessel rinsing, and standard solution stability.

Major apparatus/reagent factors occurring during analyses are enumerated below.

(1) Factors directly affecting the analysis performance

- Sampling mechanism
- Reagent dispensing mechanism
- Mixer
- Optical system
- Reaction vessel
- Thermostatic oven

(2) Other factors affecting the analysis performance

- Reagent
- Sample/control specimen liquidity

When an automatic analyzer is to be used daily, the following confirmation procedures are followed to verify the above factors and check whether normal clinical examinations can be conducted.

(1) Calibration with standard solution

Each item-specific reagent bottle is calibrated. A blank solution and a standard solution are measured to determine the origin, calculate the absorbance per unit concentration, and calculate a conversion factor (hereinafter referred to as the K factor). In general, a clinical technologist determines the magnitude of absorbance and temporal changes in the K factor to judge whether the results of calibration are acceptable.

(2) Accuracy control

An accuracy control sample having a known concentration is calibrated and then measured to verify the difference from a reference value. Further, while a patient specimen is being measured, the accuracy control sample is measured periodically at regular time intervals to check for deviation from a permissible value. If the permissible value is exceeded, an inspection is conducted on the assumption that there is a problem with either the reagent or apparatus.

Even when the above checks are conducted, the cause of the problem cannot easily be determined. The reason is that a plurality of factors are involved. An experienced technologist examines the reaction process absorbance and previously recorded data as well as the currently obtained calibration results and accuracy control results, and then identifies the problem cause, remedies the problem, makes repairs, replaces the reagent, effects recalibration, and performs other relevant tasks.

Recent improvements in the performance of automatic analyzers have made it possible to perform high-accuracy analyses of various items through the use of a trace amount of specimen and reagent. In some cases, however, high-accuracy analyses cannot be accomplished due, for instance, to slight abnormality in an apparatus component or slight deterioration of a specimen or reagent. Automatic analyzers for clinical examination measure, at regular intervals, the absorbance of a solution in which a sample has reacted with a reagent, and determine an absorbance change rate and final absorbance from the measured time-series data about absorbance. The obtained data is then used to calculate concentration and enzyme activity. In a reaction process, the automatic analyzers perform sampling, reagent dispensing, and mixing processes. These processes contain a plurality of error factors. Previously, in particular, the execution and level of the mixing process have not been quantitatively evaluated. Further, judgment criteria have not been defined. Therefore, the degree of reproducibility and the presence of blunders (indicated by discontinuous measured values or other measured values that are obviously affected by some abnormality) have been vaguely evaluated. When, for instance, a reagent is diluted by reagent probe rinsing water, an irrelevant solution is inadvertently mixed with the reagent by a user, or some other factor arises to directly affect a reaction, it is necessary that the automatic analyzers detect such an abnormality, inform the user of the abnormality, and prompt for reexamination or apparatus maintenance. Particularly, when the endpoint method is employed to calculate a measured value through the use of one photometric point, it is impossible to check the measured value for slow reaction or other reaction abnormality, thereby making it difficult to recognize that the measured value is increased due to reagent dilution. It is difficult for a clinical technologist, who is the user of an automatic analyzer, to visually check all reaction processes during routine examination work. Especially when a measured value is within a normal value range, the clinical technologist tends to overlook reaction abnormalities and may produce low-accuracy results.

The present invention uses an approximate expression that is based on a theoretical chemical reaction formula derived from reaction process data, and provides an index that makes it possible to check for apparatus abnormalities, reagent deterioration, and improper accuracy control during each continuous or individual inspection. According to a chemical reaction theory, the rate at which substance concentration varies during a reaction is determined by a reaction rate constant that is specified for each reaction. Further, it is known that substance concentration is proportional to absorbance. The present invention is characterized in that it uses absorbance changes in a reaction process, which are measured by an automatic analyzer, as the results of chemical reaction, approximates the reaction process to calculate a reaction rate on an individual reaction basis, and monitors the reaction status by using the calculated reaction rate as an index.

The reaction process data, which is measured when an automatic analyzer determines the relationship between reaction absorbance and time, is approximated to $ABS = A_0 + A_1 (1 - e^{-kt})$ by the least-squares method. The resulting reaction start point absorbance $A_0$, final reaction absorbance $A_1$, reaction rate constant $k$, and residual error, which is the aggregate sum of differences between approximate values and measured values, are then used as the index of reaction status.

Index candidates are the following calculation parameters:

1) $A_0$ (absorbance prevailing at the beginning of reaction)
2) $A_1$ (final reaction absorbance)

3) k (reaction rate constant)
4) Residual error (difference between approximate expression and measured value)
5) A combination of the above parameters

Parameters other than the reaction rate constant k in the above approximate expression, such as $A_0$ and $A_1$, can be various parameter values upon approximate expression deformation. However, the method according to the present invention can be applied to an approximate expression that uses the reaction rate constant k.

The evaluation method according to the present invention makes it possible to use daily examination data for the purpose of checking for abnormalities in factors related to apparatus abnormalities affecting the reaction rate, thereby contributing to the maintenance of apparatus performance.

The influence of mixing is such that the reaction rate changes when mixing is stopped. Calculating and monitoring the reaction rate in a control specimen, standard solution, or other specimen having a known concentration is checking for temporal changes in the performance of a mixer. This enables the automatic analyzer to positively inform an apparatus user of the necessity for mixer maintenance and replacement. The execution and level of the mixing process, which have been vaguely evaluated, can then be quantified. This makes it possible to verify and determine the optimum parameters for each mixer abnormality detection and reagent.

If the reagent is deteriorated or diluted by rinsing water in a reagent probe, the reaction rate becomes affected. As the present invention can digitize the degree of slowness of reaction, it makes it possible to detect reaction abnormalities. Consequently, the performance of the reagent can be evaluated to detect a reagent deterioration caused by a human mistake during a daily examination and prevent an erroneous data output from being overlooked.

BRIEF DESCRIPTION OF THE DRAWINGS

Fig. 1 is a schematic diagram illustrating a logistic curve.
Fig. 2 illustrates a reaction process related to the use of a rate analysis method.
Fig. 3 illustrates a reaction process related to the use of an endpoint analysis method.
Fig. 4 is a perspective view illustrating the configuration of an automatic analyzer according to an embodiment of the present invention.
Fig. 5 shows the distribution of the value k of an ALP mixing failure experiment.
Fig. 6 shows the distribution of the value k of a T-CHO mixing failure experiment.
Fig. 7 illustrates the monitoring of approximate expression calculation parameters and the detection of an apparatus abnormality.
Fig. 8 illustrates the reaction processes of T-CHO reagent dilution experiments.
Fig. 9 shows the distribution of the value k of a T-CHO reagent dilution experiment.
Fig. 10 illustrates a method of detecting/displaying reagent lot changes and reagent deteriorations.
Fig. 11 illustrates a method of detecting/displaying reagent lot changes and reagent deteriorations.
Fig. 12 shows the distribution of the value k of a UREA mixing level verification experiment.
Fig. 13 shows the residual error distribution of a UREA mixing level verification experiment.
Fig. 14 shows the reaction processes of a UREA mixing level verification experiment.

Description of Reference Numerals

| | |
|---|---|
| 1 | Sample disk |
| 2 | Reagent disk |
| 3 | Reaction disk |
| 4 | Reaction tank |
| 5 | Sampling mechanism |
| 6 | Pipetting mechanism |
| 7 | Mixer |
| 8 | Photometry mechanism |
| 9 | Rinsing mechanism |
| 10 | Display section |
| 11 | Input section |
| 12 | Storage section |
| 13 | Control section |
| 14 | Piezoelectric element driver |
| 15 | Mixer controller |
| 16 | Sample vessel |
| 17, 19 | Circular disk |
| 18 | Reagent bottle |
| 20 | Cool box |
| 21 | Reaction vessel |
| 22 | Reaction vessel holder |
| 23 | Drive mechanism |
| 24, 27 | Probe |
| 25, 28 | Bearing shaft |
| 26, 29 | Arm |
| 30 | Piezoelectric element |
| 31 | Retainer |
| 32 | Electrode |
| 33 | Nozzle |
| 34 | Vertical drive mechanism |

DESCRIPTION OF THE PREFERRED EMBODIMENTS

The evaluation method according to the present invention makes it possible to use daily examination data for the purpose of checking for abnormalities in factors related to apparatus abnormalities affecting the reaction rate, thereby contributing to the maintenance of apparatus performance.

An automatic analyzer according to an embodiment of the present invention will now be described.

Apparatus configuration

Referring to Fig. 4, the reference numeral 1 denotes a sample disk; 2, a reagent disk; 3, a reaction disk; 4, a reaction tank; 5, a sampling mechanism; 6, a pipetting mechanism; 7, a mixer; 8, a photometry mechanism; 9, a rinsing mechanism; 10, a display section; 11, an input section; 12, a storage section; 13, a control section; 14, a piezoelectric element driver; 15, a mixer controller; 16, a sample vessel; 17, 19, circular disks; 18, a reagent bottle; 20, a cool box; 21, a reaction vessel; 22, a reaction vessel holder; 23, a drive mechanism; 24, 27, probes; 25, 28, bearing shafts; 26, 29, arms; 30, a piezoelectric element; 31, a retainer; 32, an electrode; 33, a nozzle; and 34, a vertical drive mechanism. The storage section stores, for instance, analysis parameters, permissible analysis count of each reagent bottle, maximum analysis count, calibration results, and analysis results.

Analysis section operations

As described in detail below, an analysis section sequentially performs sampling, reagent dispensing, mixing, photometric measurement, reaction vessel rinsing, and concentration conversion and other data processing operations in the order named.

A plurality of units of the sample vessel 16, which each contain a sample, are mounted on the sample disk 1. The control section 13 controls the sample disk 1 through the display section 10.

The sample disk moves to a location beneath a sampling probe 24 in accordance with the order of samples to be analyzed. A specified amount of specimen in the specified sample vessel 16 is dispensed into the reaction vessel 21 by a sample pump that is coupled to the specimen sampling mechanism 5.

The reaction vessel 21, into which the sample is dispensed, moves to a first reagent addition position in the reaction tank 4. A reagent pump (not shown), which is coupled to a reagent dispensing probe 6, adds a specified amount of reagent, which is suctioned from a reagent vessel 18, to the moved reaction vessel 16.

After completion of first reagent addition, the reaction vessel 21 moves to the mixer 7 in which initial mixing occurs.

The above-described reagent addition and mixing operations are performed for the first to fourth reagents.

The reaction vessel 21, in which the contents are mixed, passes through a beam of light emitted from a light source so that the prevailing absorbance is detected by the photometry mechanism 8 of a multiwavelength photometer. A signal representing the detected absorbance enters the control section 13 and is converted to the concentration of the specimen.

The data obtained upon conversion to concentration is stored in the storage section 12 and displayed on the display section.

After completion of photometry, the reaction vessel 21 is transported to the rinsing mechanism 9, rinsed, and used for the next analysis.

This analyzer is used to make the following three types of measurements.

(1) Standard solution measurement

A reagent is used for each item. However, each reagent is calibrated with a standard solution.

Two types of solutions (standard solution and blank solution) are generally used. The blank solution has a concentration of zero (0). It does not react in most cases and represents the origin. The standard solution contains components of various items. Its concentration or activity or other similar value is measured and guaranteed by a manufacturer. Numerical values vary from one manufacturing lot to another.

(a) Measurement data

- Measured value and absorbance of each standard solution (main wavelength and sub-wavelength)
- Initial absorbance

(b) Calculation parameters

- K factor
- S1ABS

(2) Accuracy control sample measurement

(a) Apparatus abnormality and other alarm information

Electrical circuit and mechanism abnormalities in an apparatus.

(b) Control specimen measurement results

Measurement results of control specimens, reagent lot, control specimen lot, etc.

(c) Calibration results

(3) Patient specimen/sample measurement

Various measurements of a biological sample are taken in accordance with the calculation parameters for the previously measured standard solution.

(a) Measurement data

- Measured value and absorbance of each biological sample (main wavelength and sub-wavelength)
- Initial absorbance

The evaluation method according to the present invention makes it possible to use daily examination data for the purpose of checking for abnormalities in factors related to apparatus abnormalities affecting the reaction rate, thereby contributing to the maintenance of apparatus performance.

1. Outgoing inspection of the mixer

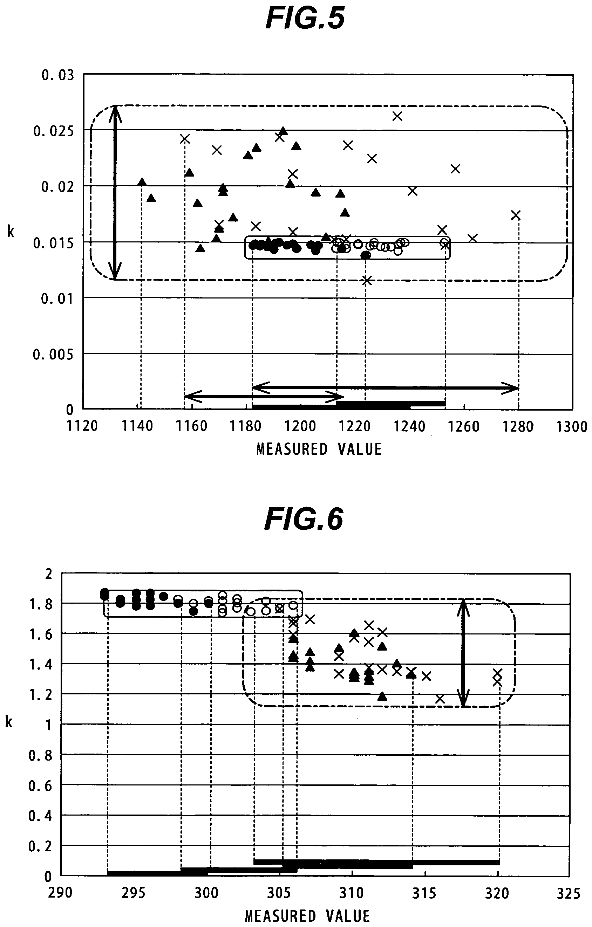

The evaluation method according to the present invention makes it possible to conduct a quantitative outgoing inspection of the mixer. As regards a plurality of inspection items, a predetermined sample is measured to acquire a reaction process. The approximate expression in the acquired reaction process is calculated to determine the calculation parameters. Similar reagents and samples are used to make measurements a number of times to confirm the numerical values and variations of the calculation parameters. The confirmed numerical values and variations can be compared against predefined reference values to verify the performance of the mixer. Not only the measured value variations but also the variations and magnitudes of approximate expression calculation parameters serve as the reference for evaluating whether normal mixing is being performed. Formerly, whether mixing was done could not be evaluated. In addition, no judgment criteria were defined. Therefore, the degree of reproducibility and the presence of blunders were vaguely evaluated. Figs. 5 and 6 show the results of evaluation experiments that were conducted in accordance with the present invention to determine whether mixing was done and assess the level of mixing. Fig. 5 shows the distribution of the value k that is an approximate expression calculation parameter for an ALP evaluation experiment based on a rate analysis method. Fig. 6 shows the distribution of the value k that is an approximate expression calculation parameter for a T-CHO mixing failure experiment based on an endpoint analysis method. As regards a mixing process, which was formerly evaluated in accordance with the reproducibility of measured values, the value k, which is an approximate expression calculation parameter, can be additionally used as an index.

2. Evaluating the performance of the mixer in accordance with daily inspection data

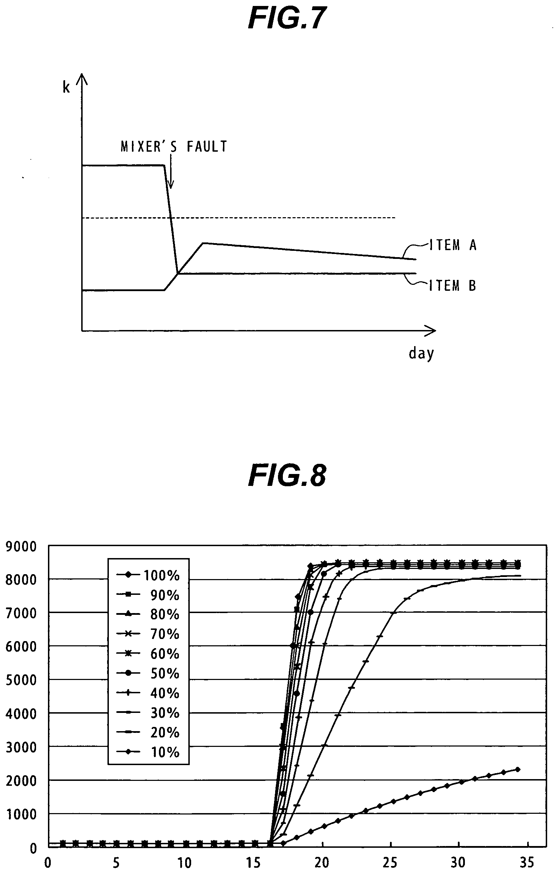

The evaluation method according to the present invention calculates an approximate expression from daily inspection data, accuracy control sample data, and patient data reaction process to determine the calculation parameters. The calculation parameters are recorded in the storage section to monitor daily calculation parameters. If a predefined inspection item deviates from a reference value, it is possible to indicate the possibility of the mixer being faulty. The present invention makes it possible to manage the performance of the mixer in accordance with temporal changes in the calculation parameters, thereby contributing to the maintenance of apparatus performance. Fig. 7 indicates that the value k, which is a calculation parameter, is monitored to detect an apparatus fault or the like.

3. Detecting a reagent that is diluted by reagent probe rinsing water

Particularly when the endpoint method is used, the measured values are not enough to check for a slow reaction that is caused by reagent dilution, and it is difficult to recognize that the measured values are increased. It is difficult for a clinical technologist to visually check the reaction processes of all tests during routine work. Especially when a measured value is within a normal value range, the clinical technologist may overlook a slow reaction, thereby producing low-accuracy results. When the reagent is diluted by reagent probe rinsing water, the present invention makes it possible to numerically evaluate the degree of slowness of reaction by using the numerical values of approximate expression calculation parameters derived from the reaction processes. As the reaction status can be grasped by displaying an evaluated value concerning the degree of slowness together with the measured values, it is possible to make a report on accurate results. In addition, the approximate expression calculation parameters can be an evaluated value of the certainty factor of a normal reaction regarding individual test reactions.

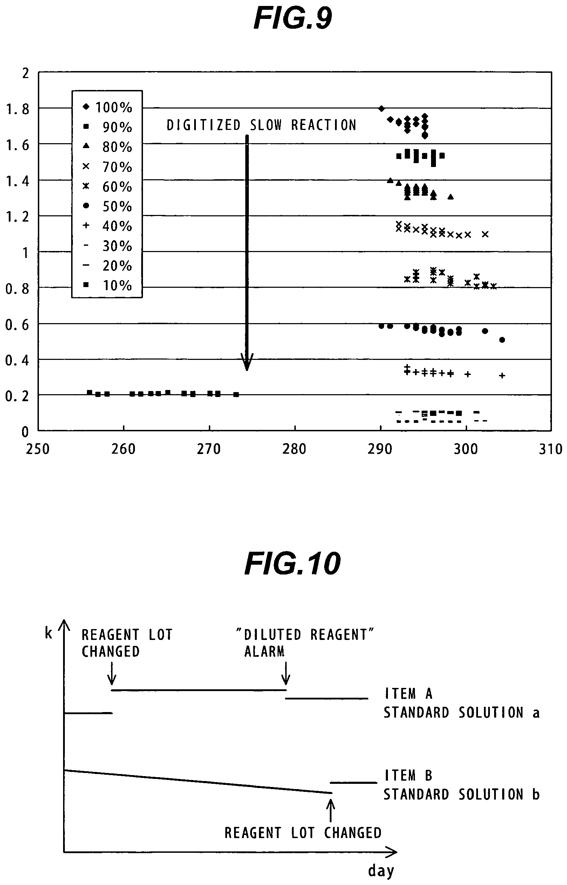

Fig. 8 shows the results of experiments that were conducted to confirm reaction processes by preparing a 100 to 10% dilution series for the first and second reagents in relation to T-CHO based on the endpoint analysis method and artificially diluting the reagents. The reaction processes of the diluted reagents were slower than a normal reaction process. Further, reaction abnormalities were noted. Fig. 9 indicates that such slow reactions can be quantitatively evaluated through the use of the value k. Reaction abnormalities can be detected when such slow reactions are digitized.

When slow reactions can be detected, the following functions are implemented:

- Function for making a quantitative evaluation of reagent deterioration
- Function for detecting a reagent that is diluted by rinsing water
- Function for detecting an improper reagent mixture that is inadvertently made by an apparatus user

4. Detecting a reagent deterioration

When the approximate expression calculation parameters are monitored in accordance with the results of accuracy control sample measurements and patient data derived from daily examinations, the present invention makes it possible to evaluate the responsiveness of a reagent. If an apparatus user has inadvertently made an improper reagent mixture or diluted a reagent in the reagent bottle, a slow reaction occurs. The present invention can detect such a slow reaction as a reagent deterioration. The approximate expression calculation parameters concerning various daily items are recorded in the apparatus. If a test reveals a deviation from the predetermined numerical value of an approximate expression calculation parameter, it is possible to detect a reagent deterioration and issue an alarm to notify the apparatus user of the detected reagent deterioration. Threshold values may be automatically determined from the approximate expression calculation parameters of various items for several days, and used instead of predetermined numerical values.

5. Recording reagent lot changes

If the apparatus user performs reagent replenishment by using a reagent that is obtained from a lot other than the previous one, the responsiveness of the reagent changes. According to the present invention, such a change in the responsiveness of the reagent can be detected by using the approximate expression calculation parameters. If calibration is not effected when the reagent lot changes, it is probable that an incorrect measured value may be calculated. The apparatus according to the present invention automatically detects a change in the reagent lot, issues an alarm, if calibration is not effected, to prompt for calibration, thereby making it possible to prevent an incorrect measured value from being calculated. Reagent lot changes and calibrations are recorded in the storage section of the apparatus. Formerly, the apparatus user used a list external to the apparatus to manage the information about reagent lot changes. However, when the apparatus incorporates the functionality according to the present invention, the apparatus detects reagent lot changes. Therefore, a record of the detected reagent lot changes can be used to recognize the frequency of reagent use and facilitate the ordering of reagents and the understanding of inventory status.
Fig. 10 shows an example to illustrate a method of detecting reagent lot changes and reagent deteriorations. A method of monitoring the aggregate sum of evaluated values of approximate expression calculation parameters for various items or monitoring the individual evaluated values may also be used.

6. Evaluating the responsiveness of a reagent

When a reagent to be purchased is to be investigated, the evaluation method according to the present invention makes it possible to calculate approximate expression calculation parameters for the same item from a plurality of different types of reagents and make an evaluation of responsiveness. The evaluation method according to the present invention also makes it possible to evaluate the responsiveness of reagents during reagent development through the use of approximate expression parameters and establish a standard for highly responsive, stable reagents.

7. Index for accuracy control

The evaluation method according to the present invention makes it possible to calculate an approximate expression parameter for various measurement items from a process of reaction between a standard solution and a control, monitor the approximate expression parameter, and use the result of monitoring as an accuracy control sample index.

8. Method of evaluating the characteristics of reagents and the level of mixing

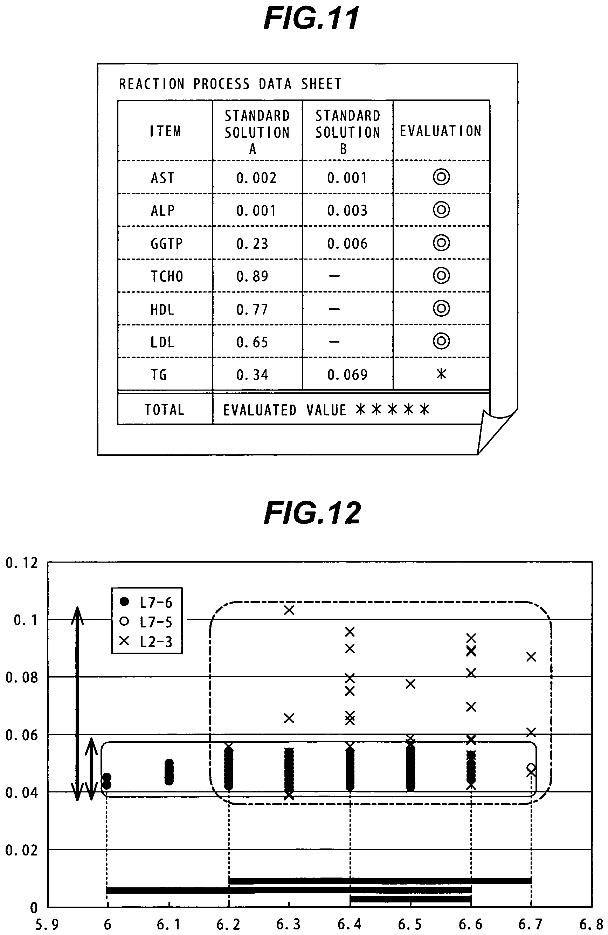

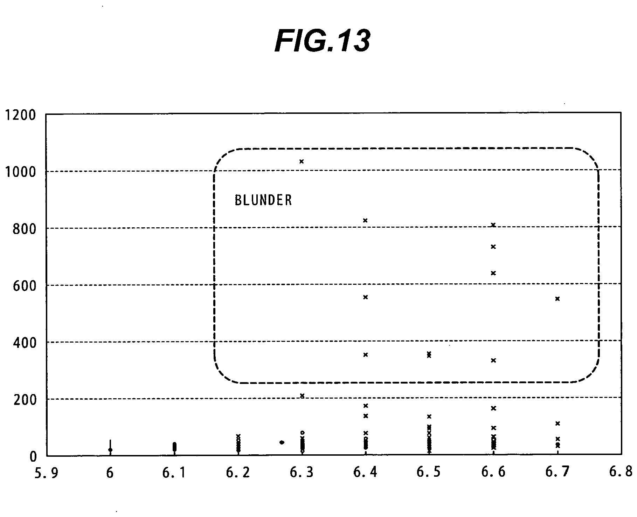

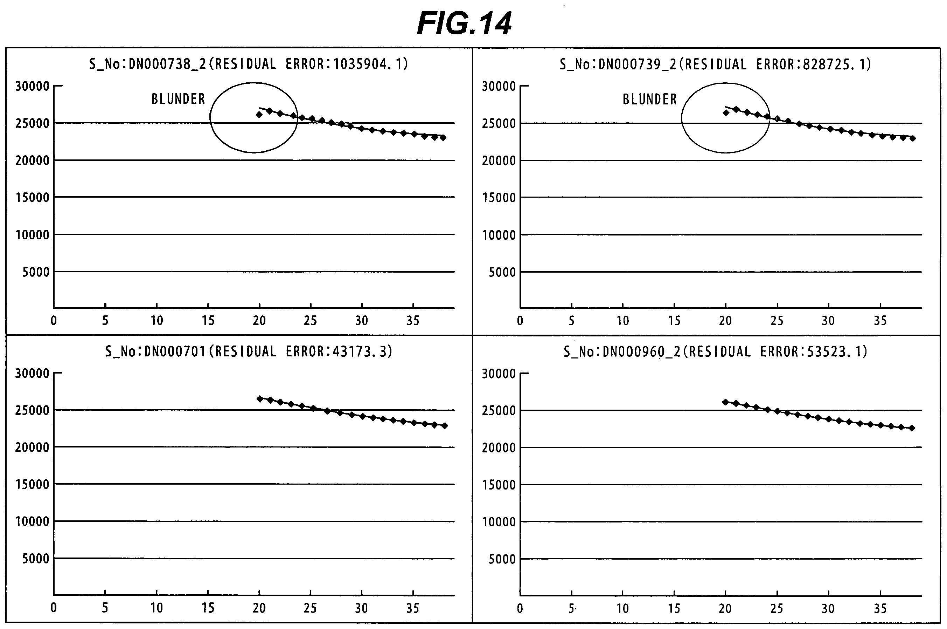

The evaluation method according to the present invention makes it possible to investigate an optimum mixing level for the characteristics of individual reagents for various measurement items. Figs. 12, 13, and 14 are derived from an earlier model of the apparatus to show the results of comparative experiments that were conducted on level 2, which is not optimized for the reagent for the measurement item UREA, and on mixing level 7, which is defined in consideration of reagent characteristics. Formerly, a graph representing a reaction process was visually checked for blunders, as indicated in Fig. 14. However, the evaluation method according to the present invention makes it possible to detect a blunder in a reaction process in accordance with the value k in Fig. 12 or a residual error in Fig. 13. Previously, each reaction process had to be visually checked. However, a reaction process approximation method can provide a tool that is capable of making a quantitative evaluation of mixing levels.

**Claims**

1. An automatic analyzer comprising:

a storage section (12) for storing absorbance changes on a time-series basis;
approximate expression calculation means for determining, in accordance with the absorbance changes stored in the storage section (12), an approximate expression that is expressed by the equation, absorbance (ABS) = $A_0 + A_1(1 - e^{-kt})$, where t is time and k is a reaction rate constant;
judgment means for judging the presence of a reaction abnormality in accordance with a combination of parameters including the value k, which is determined by the approximate expression calculation means,

**characterized by**:

degree-of-mixing index computation means for determining an index of the degree of mixing of a specimen and a reagent in accordance with the value k, which is determined by the approximate expression calculation means; and warning generation means for generating a mixing failure warning when a preselected index is not reached by the index determined by the degree-of-mixing index computation means.

2. The automatic analyzer according to claim 1, wherein the reaction for determining the index is based on the results of accuracy control sample measurements.

3. The automatic analyzer according to claim 2, further comprising:

storage means for storing an index on a time-series basis; and display means (10) for displaying the index stored in the storage means on a time-series basis.

4. The automatic analyzer according to claim 2, further comprising mixing condition setup means for setting optimum mixing conditions for each reagent in accordance with the determined index.

5. The automatic analyzer according to claim 1, further comprising at least one of the following:

judgment means for judging the compatibility of a reagent with an analyzer used for measurements by comparing the values k that prevail when different types of reagents are measured relative to the same item; judgment means for judging the deterioration of a reagent by comparing the temporal changes in the value k that prevails when the same type of reagent is measured; detection means for detecting a reagent lot change in accordance with a change in the value k.

6. The automatic analyzer according to claim 1, further comprising judgment means for judging the compatibility of a reagent with an analyzer used for measurements by comparing the values k that prevail when different types of reagents are measured relative to the same item.

7. A method of judging the presence of an abnormality in an automatic analyzer having a storage section (12) for storing absorbance changes on a time-series basis, the method comprising:

an approximate expression calculation step of determining, in accordance with the absorbance changes stored in the storage section (12), an approximate expression that is expressed by the equation, absorbance (ABS) = $A_0 + A_1(1-e^{-kt})$, where $A_0$ is the absorbance prevailing at the beginning of reaction, $A_1$ is final reaction absorbance, and k is a reaction rate constant; a judgment step of judging the presence of a reaction abnormality in accordance with a combination of parameters including the value k, which is determined in the approximate expression calculation step,

**characterized by**:

a degree-of-mixing index computation step of determining an index of the degree of mixing of a specimen and a reagent in accordance with the value k, which is determined in the approximate expression calculation step; and a warning generation step of generating a mixing failure warning when a preselected index is not reached by the index determined in the degree-of-mixing index computation step.

8. The method according to claim 7, further comprising a judgment step of judging the deterioration of a reagent by comparing the temporal changes in the value k that prevails when the same type of reagent is measured.

**Patentansprüche**

1. Automatisches Analysegerät mit
einem Speicherabschnitt (12) zum Speichern von Absorptionsänderungen auf einer Zeitreihenbasis, einer Näherungsausdrucks-Berechnungseinrichtung, um auf Grundlage der in dem Speicherabschnitt (12) gespeicherten Absorptionsänderungen einen Näherungsausdruck zu bestimmen, der durch die Gleichung Absorption (ABS) = $A_0 + A_1(1-e^{-kt})$ ausgedrückt ist, wobei t die Zeit und k eine Reaktionsratenkonstante ist, einer Beurteilungseinrichtung, um das Vorhandensein einer Reaktionsabnormität auf Grundlage einer Kombination von Parametern einschließlich des Werts k zu beurteilen, der durch die Näherungsausdrucks-Berechnungseinrichtung bestimmt wurde,
**gekennzeichnet durch**:

eine Vermischungsgradindex-Berechnungseinrichtung zum Bestimmen eines Indexes des Vermischungsgrads einer Probe mit einem Reagens auf Grundlage des Werts k, der durch die Näherungsausdrucks-Berechnungseinrichtung bestimmt wurde; und
eine Warnungserzeugungseinrichtung zum Erzeugen einer Vermischungsfehlerwarnung, wenn ein vorausgewählter Index nicht durch den durch die Vermischungsgradindex-Berechnungseinrichtung bestimmten Index erreicht wird.

2. Automatisches Analysegerät nach Anspruch 1, wobei die Reaktion zum Bestimmen des Indexes auf den Ergebnissen von Genauigkeitskontrollprobenmessungen basiert.

3. Automatisches Analysegerät nach Anspruch 2, ferner mit
einer Speichereinrichtung zum Speichern eines Indexes auf einer Zeitreihenbasis und
einer Anzeigeeinrichtung (10) zum Anzeigen des in der Speichereinrichtung auf einer Zeitreihenbasis gespeicherten Indexes.

4. Automatisches Analysegerät nach Anspruch 2, ferner mit einer Mischbedingungs-Einstelleinrichtung zum Einstellen optimaler Mischbedingungen für jedes Reagens auf Grundlage des bestimmten Indexes.

5. Automatisches Analysegerät nach Anspruch 1, ferner mit:

einer Beurteilungseinrichtung zum Beurteilen der Kompatibilität eines Reagens mit einem für die Messungen verwendeten Analysegerät, indem die Werte k verglichen werden, die vorherrschen, wenn verschiedene Arten von Reagenzien bezüglich der selben Einheit gemessen werden; und/oder
einer Beurteilungseinrichtung zum Beurteilen der Verschlechterung eines Reagens, indem die temporären Änderungen in dem Wert k verglichen werden, die vorherrschen, wenn die gleiche Art von Reagens gemessen wird; und/oder
einer Erfassungseinrichtung zum Erfassen einer Reagenzlosänderung auf Grundlage einer Änderung in dem Wert k.

6. Automatisches Analysegerät nach Anspruch 1, ferner mit einer Beurteilungseinrichtung zum Beurteilen der Kompatibilität eines Reagens mit einem für Messungen benutzten Analysegerät, indem die Werte k verglichen werden, die vorherrschen, wenn verschiedene Arten von Reagenzien bezüglich der gleichen Einheit gemessen werden.

7. Verfahren zum Beurteilen des Vorhandenseins einer Abnormität in einem automatischen Analysegerät mit einem Speicherabschnitt (12) zum Speichern von Absorptionsänderungen auf einer Zeitreihenbasis, wobei in dem Verfahren:

in einem Näherungsausdrucks-Berechnungsschritt auf Grundlage von in dem Speicherabschnitt (12) gespeicherten Absorptionsänderungen ein Näherungsausdruck bestimmt wird, der durch die Gleichung Absorption (ABS) = $A_0$ + $A_1(1-e^{-kt})$ ausgedrückt ist, wobei $A_0$ die zu Beginn einer Reaktion vorherrschende Absorption, $A_1$ die finale Reaktionsabsorption und k eine Reaktionsratenkonstante ist,
in einem Beurteilungsschritt das Vorhandensein einer Reaktionsabnormität auf Grundlage einer Kombination von Parametern einschließlich des Werts k beurteilt wird, der in dem Näherungsausdruck-Berechnungsschritt bestimmt wurde, **dadurch gekennzeichnet, dass**
in einem Vermischungsgradindex-Berechnungsschritt ein Index des Vermischungsgrads einer Probe mit einem Reagens auf Grundlage des Werts k bestimmt wird, der in dem Näherungsausdrucks-Berechnungsschritt bestimmt wurde, und
in einem Warnungserzeugungsschritt eine Vermischungsfehlerwarnung erzeugt wird, wenn ein vorausgewählter Index nicht durch den in dem Vermischungsgradindex-Berechnungsschritt bestimmten Index erreicht wird.

8. Verfahren nach Anspruch 7, in dem ferner in einem Beurteilungsschritt die Verschlechterung eines Reagens beurteilt wird, indem die zeitlichen Änderungen in dem Wert k verglichen werden, die vorherrschen, wenn die gleiche Art von Reagens gemessen wird.

**Revendications**

1. Analyseur automatique comprenant :

une section (12) de stockage pour stocker des changements d'absorbance sur une base chronologique ;
un moyen de calcul d'expression approchée pour déterminer, conformément aux changements d'absorbance stockés dans la section (12) de stockage, une expression approchée qui est exprimée par l'équation, absorbance (ABS) = $A_0+A_1(1-e^{-kt})$, où t est le temps et k est une constante de taux de réaction ;
un moyen de jugement pour juger de la présence d'une anomalie de réaction conformément à une combinaison de paramètres incluant la valeur k, qui est déterminée par le moyen de calcul d'expression approchée,

**caractérisé par** :

un moyen de calcul d'indice de degré de mélange pour déterminer un indice du degré de mélange d'un spécimen et d'un réactif conformément à la valeur k, qui est déterminée par le moyen de calcul d'expression approchée ; et
un moyen de génération d'avertissement pour générer un avertissement d'échec de mélange lorsqu'un indice présélectionné n'est pas atteint par l'indice déterminé par le moyen de calcul d'indice de degré de mélange.

2. Analyseur automatique selon la revendication 1, dans lequel la réaction pour déterminer l'indice est basée sur les résultats de mesures d'échantillons de contrôle de précision.

3. Analyseur automatique selon la revendication 2, comprenant en outre :

un moyen de stockage pour stocker un indice sur une base chronologique ; et
un moyen (10) d'affichage pour afficher l'indice stocké dans le moyen de stockage sur une base chronologique.

4. Analyseur automatique selon la revendication 2, comprenant en outre un moyen de paramétrage de conditions de mélange pour paramétrer des conditions de mélange optimum pour chaque réactif conformément à l'indice déterminé.

5. Analyseur automatique selon la revendication 1, comprenant en outre au moins un des suivants :

un moyen de jugement pour juger de la compatibilité d'un réactif avec un analyseur utilisé pour des mesures en comparant les valeurs k qui prévalent lorsque différents types de réactifs sont mesurés par rapport au même élément ;
un moyen de jugement pour juger de la détérioration d'un réactif en comparant les changements temporels de la valeur k qui prévaut lorsque le même type de réactif est mesuré ;
un moyen de détection pour détecter un changement de lot de réactif conformément à un changement de la valeur k.

6. Analyseur automatique selon la revendication 1, comprenant en outre un moyen de jugement pour juger de la compatibilité d'un réactif avec un analyseur utilisé pour des mesures en comparant les valeurs k qui prévalent lorsque différents types de réactifs sont mesurés par rapport au même élément.

7. Procédé pour juger de la présence d'une anomalie dans un analyseur automatique ayant une section (12) de stockage pour stocker des changements d'absorbance sur une base chronologique, le procédé comprenant :

une étape de calcul d'expression approchée pour déterminer, conformément aux changements d'absorbance stockés dans la section (12) de stockage, une expression approchée qui est exprimée par l'équation, absorbance (ABS) $= A_0 + A_1(1-e^{-kt})$, où $A_0$ est l'absorbance prévalant au début de la réaction, $A_1$ est l'absorbance finale de réaction, et k est une constante de taux de réaction ;
une étape de jugement pour juger de la présence d'une anomalie de réaction conformément à une combinaison de paramètres incluant la valeur k, qui est déterminée à l'étape de calcul d'expression approchée,

**caractérisé par** :

une étape de calcul d'indice de degré de mélange pour déterminer un indice du degré de mélange d'un spécimen et d'un réactif conformément à la valeur k, qui est déterminée à l'étape de calcul d'expression approchée ; et
une étape de génération d'avertissement pour générer un avertissement d'échec de mélange lorsqu'un indice présélectionné n'est pas atteint par l'indice déterminé à l'étape de calcul d'indice de degré de mélange.

8. Procédé selon la revendication 7, comprenant en outre une étape de jugement pour juger de la détérioration d'un réactif en comparant les changements temporels de la valeur k qui prévaut lorsque le même type de réactif est mesuré.

## FIG.1

$$ABS = A0 + A1(1 - e^{kt})$$

## FIG.2

## FIG.3

## FIG.4

## FIG.5

## FIG.6

## FIG.7

## FIG.8

## FIG.9

## FIG.10

# FIG.11

REACTION PROCESS DATA SHEET

| ITEM | STANDARD SOLUTION A | STANDARD SOLUTION B | EVALUATION |
|------|------|------|------|
| AST | 0.002 | 0.001 | ◎ |
| ALP | 0.001 | 0.003 | ◎ |
| GGTP | 0.23 | 0.006 | ◎ |
| TCHO | 0.89 | — | ◎ |
| HDL | 0.77 | — | ◎ |
| LDL | 0.65 | — | ◎ |
| TG | 0.34 | 0.069 | ✕ |
| TOTAL | EVALUATED VALUE ✱✱✱✱✱ | | |

# FIG.12

FIG.13

# FIG.14

S_No:DN000738_2(RESIDUAL ERROR:1035904.1)

BLUNDER

S_No:DN000739_2(RESIDUAL ERROR:828725.1)

BLUNDER

S_No:DN000701(RESIDUAL ERROR:43173.3)

S_No:DN000960_2(RESIDUAL ERROR:53523.1)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005201843 A
- JP 6194313 A
- JP 2004347385 A
- JP H09325150 A